# EUROPEAN PATENT APPLICATION

(11) **EP 4 329 268 A1**
(43) Date of publication of application: **28.02.2024**
(21) Application number: 22799157.7
(22) Date of filing: 06.05.2022
(51) Int. Cl.: H04L 67/14, H04L 67/60, H04L 47/283

(54) **USER PLANE FUNCTION SELECTION SUPPORT METHOD AND DEVICE IN WIRELESS COMMUNICATION SYSTEM**

(30) Priority: 07.05.2021 KR 20210059564
(71) Applicant: Samsung Electronics Co., Ltd., Suwon-si, Gyeonggi-do 16677 (KR)
(72) Inventor: LEE, Jicheol, Suwon-si Gyeonggi-do 16677 (KR); PARK, Jungshin, Suwon-si Gyeonggi-do 16677 (KR)
(74) Representative: Gulde & Partner
(86) International application number: PCT/KR2022/006491
(87) International publication number: WO 2022/235114

(57) **Abstract**

The present disclosure relates to a 5G or 6G communication system for supporting a higher data transmission rate. A method performed by a session management function (SMF) entity in a wireless communication system, according to various embodiments of the present disclosure, comprises the steps of: receiving a first message comprising a user plane latency (UPL) requirement from a policy control function (PCF) entity; and determining whether to perform PDU session anchor (PSA) user plane function (UPF) relocation, on the basis of the first message..

## Description

### [Technical Field]

The disclosure relates to a method and a device of supporting user plane function (UPF) selection in a wireless communication system.

### [Background Art]

To meet the demand for wireless data traffic having increased since deployment of 4th generation (4G) communication systems, efforts have been made to develop an improved 5th generation (5G) or pre-5G communication system. Therefore, the 5G or pre-5G communication system is also called a "beyond 4G Network" communication system or a "post LTE" system.

The 5G communication system is considered to be implemented in ultrahigh frequency (mmWave) bands (e.g., 60GHz bands) so as to accomplish higher data rates. To decrease propagation loss of the radio waves and increase the transmission distance in the ultrahigh frequency bands, beamforming, massive multiple-input multiple-output (massive MIMO), full dimensional MIMO (FD-MIMO), array antenna, analog beam forming, large scale antenna techniques are discussed in 5G communication systems.

In addition, in 5G communication systems, development for system network improvement is under way based on advanced small cells, cloud radio access networks (RANs), ultra-dense networks, device-to-device (D2D) communication, wireless backhaul, moving network, cooperative communication, coordinated multi-points (CoMP), reception-end interference cancellation and the like.

In the 5G system, hybrid FSK and QAM modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have also been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through connection with a cloud server, has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have been recently researched. Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply 5G communication systems to IoT networks. For example, technologies such as a sensor network, machine type communication (MTC), and machine-to-machine (M2M) communication may be implemented by beamforming, MIMO, and array antennas. Application of a cloud radio access network (cloud RAN) as the above-described big data processing technology may also be considered an example of convergence of the 5G technology with the IoT technology.

5GC may support the following distinguishable functions, compared to an evolved packet core (EPC) that is a conventional network core for 4G.

First, in 5GC, a network slicing function is introduced. As requirements of 5G, 5GC is required to support various terminal types and services (e.g., enhanced mobile broadband (eMBB), ultra-reliable low-latency communications (URLLC), and massive machine type communications (mMTC)). Such terminals/services have different requirements for a core network. For example, the eMBB service requires a high data rate, and the URLLC service requires a high stability and a low latency. A technique proposed to satisfy these various service requirements is a network slicing method.

Network slicing is a method of virtualizing one physical network to create several logical networks, and respective network slice instances (NSIs) may have different characteristics. Therefore, each NSI has a network function (FN) matching the characteristic thereof, and thus various service requirements may be satisfied. An NSI suitable for the characteristic of a required service is assigned to each terminal, so that many 5G services may be efficiently supported.

Second, 5GC may make support of a network virtualization paradigm easy by separating a mobility management function and a session management function. In 4G LTE, all terminals have been provided with services from a network through signaling exchange with single core equipment, which is called a mobility management entity (MME) serving as registration, authentication, and a mobility management and session management function. However, in 5G, the number of terminals has grown explosively, and mobility and traffic/session characteristics required to be supported are subdivided according to the types of terminals. Accordingly, if single equipment, such as a MME, supports all functions, scalability in which an entity is added for each required function may decrease. Therefore, in order to improve scalability in terms of signaling loads and the function/implementation complexity of core equipment responsible for a control plane, various functions are being developed based on a structure of separating a mobility management function and a session management function.

### [Detailed Description of the Invention]

### [Technical Problem]

An aspect of the disclosure is to provide a method and a device of determining whether to relocate a protocol data unit (PDU) session anchor UPF (PSA-UPF) by considering a latency time of a data path by a 5G core network and an application program (application function) requiring a low latency service in response to a request of the application program.

### [Technical Solution]

A method performed by a first entity in a wireless communication system according to various embodiments of the disclosure includes transmitting, to a second entity, a first message including information related to the first entity and information related to a protocol data unit (PDU) session of a terminal, receiving, from the second entity, a second message including a permission for a requirement of user plane latency (UPL) and the requirement of the UPL, and determining a third entity, based on the second message.

A method performed by a first entity in a wireless communication system according to various embodiments of the disclosure includes receiving, from the first entity, a first message including information related to the first entity and information related to a protocol data unit (PDU) session of a terminal, receiving, from a fourth entity, a second message including information related to a requirement of user plane latency (UPL), and determining whether to grant a permission for the requirement of the UPL, based on the first message and the second message.

A method performed by a session management function (SMF) entity in a wireless communication system according to various embodiments of the disclosure includes receiving a first message including a requirement of user plane latency (UPL) from a policy control function (PCF) entity, and determining whether to perform PDU session anchor (PSA) user plane function (UPF) relocation, based on the first message.

A method performed by an application function (AF) entity in a wireless communication system according to various embodiments of the disclosure includes transmitting a first message for verifying use of a requirement of user plane latency (UPL) to a policy control function (PCF) entity, and in case that the use of the requirement of the UPL is verified by the PCF entity, transmitting a second message including the requirement of the UPL to a session management function (SMF) entity via the PCF entity.

### [Advantageous Effects]

A device and a method of various embodiments of the disclosure may provide a method of considering latency requested by an application program, and when the latency requested by the application program is satisfied through an existing data path in a region to which a terminal has moved, avoiding PSA-UPF relocation to enable minimization of service interruption.

Advantageous effects obtainable from the disclosure may not be limited to the above-mentioned effects, and other effects which are not mentioned may be clearly understood, through the following descriptions, by those skilled in the art to which the disclosure pertains.

### [Brief Description of Drawings]

FIG. 1 is a diagram illustrating a structure of a wireless communication system for a 5G system according to various embodiments of the disclosure;
FIG. 2 is a diagram illustrating a procedure of use permission and approval for a user plane latency requirement in a PCF according to various embodiments of the disclosure;
FIG. 3 is a diagram illustrating a procedure of use permission and approval for a user plane latency requirement in a PCF according to various embodiments of the disclosure;
FIG. 4 is a diagram illustrating a procedure of use permission and approval for a user plane latency requirement in a 5GC network according to various embodiments of the disclosure;
FIG. 5 is a diagram illustrating an operation performed by an SMF when a requested UPLR is satisfied according to various embodiments of the disclosure;
FIG. 6 illustrates types of edge computing connectivity according to various embodiments of the disclosure;
FIG. 7 is a diagram illustrating a method in which an SMF determines whether to perform PSA UPF addition and replacement after receiving a UPL requirement, and selects a PSA UPF at the time of PSA UPF replacement according to various embodiments of the disclosure;
FIG. 8 is a flowchart illustrating an SMF operation for a case when there is only maximum allowed UPL in a UPL requirement requested by an AF according to various embodiments of the disclosure;
FIG. 9 is a flowchart illustrating an SMF operation for a case when only a minimum latency preference indicator is included in a UPL requirement requested by an AF according to various embodiments of the disclosure;
FIG. 10 is a flowchart illustrating an SMF operation for a case when a maximum allowed UPL and a minimum latency preference indicator are both included in a UPL requirement requested by an AF according to various embodiments of the disclosure;
FIG. 11 is a diagram briefly illustrating an example of an internal structure of a terminal in a wireless communication system according to various embodiments of the disclosure;
FIG. 12 is a diagram briefly illustrating an internal structure of an SMF according to an embodiment of the disclosure; and
FIG. 13 is a diagram briefly illustrating an internal structure of a PCF (or AF) according to an embodiment of the disclosure.

### [Mode for Carrying out the Invention]

Hereinafter, exemplary embodiments of the disclosure will be described in detail with reference to the accompanying drawings. It should be noted that, in the drawings, the same or like elements are designated by the same or like reference signs as much as possible. Furthermore, a detailed description of known functions or configurations that may make the subject matter of the disclosure unclear will be omitted.

In describing embodiments of the disclosure, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" or may be implemented to reproduce one or more CPUs within a device or a security multimedia card.

In the embodiments of the disclosure, a base station is an entity that allocates resources to terminals, and may be at least one of a gNode B, an eNode B, a Node B, a base station (BS), a wireless access unit, a base station controller, and a node on a network. Furthermore, in an NR system, the base station may be a network entity including at least one of an integrated access and backhaul-donor (IAB-donor), which is a gNB that provides network access to a terminal(s) through a network of backhaul and access links, and an IAB-node, which is a radio access network (RAN) node that supports an NR access link(s) to a terminal(s) and supports NR backhaul links to the IAB-donor or other IAB nodes. A terminal may be wirelessly connected via an IAB-node and transmit/receive data to/from an IAB-donor connected to at least one IAB-node through a backhaul link.

A terminal may include a user equipment (UE), a mobile station (MS), a cellular phone, a smartphone, a computer, or a variety of devices capable of performing communication functions. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, and NR) developed beyond LTE-A, and in the following description, the "5G" may be the concept that covers the exiting LTE, LTE-A, or other similar services. In addition, based on determinations by those skilled in the art, the embodiments of the disclosure may also be applied to other communication systems through some modifications without significantly departing from the scope of the disclosure.

As used in the following description, terms referring to signals, terms referring to channels, terms referring to control information, terms referring to network entities, terms referring to device elements, and the like are illustratively used for the sake of descriptive convenience. In addition, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as used below, and other terms referring to subjects having equivalent technical meanings may be used.

Furthermore, in the disclosure, various embodiments are described using terms employed in some communication standards (e.g., the 3rd generation partnership project (3GPP) standards), but they are merely illustrative examples. Various embodiments of the disclosure may be easily applied to other systems through modifications.

In the 3GPP standard, a 5G network system architecture and procedure have been standardized. A mobile communication service provider may provide many services in a 5G network. The mobile communication service provider are required to satisfy different service requirements (e.g., latency time, communication range, data rate, bandwidth, reliability, etc.) for each service to provide same.

The mobile communication service provider may configure network slices, and allocate a network resource suitable for a particular service to each network slice or each network slice set.

In a wireless communication system supporting network slicing, traffic for different network slices may be processed by different protocol data unit (PDU) sessions. Such a PDU session may imply association between a terminal and a data network providing a PDU connection service. Network slicing described above may be understood as a technology of logically configuring a network by using a set of network functions (NFs) for supporting various services having different characteristics, such as mission-critical services including broadband communication service, massive IoT, V2X, etc., and separating different network slices. Therefore, even if a communication disruption has occurred in a network slice, communication of different network slices is not affected thereby, and thus it is possible to stably provide communication services. The term "slice" in the disclosure may be used together with a term meaning a "network slice". In such a network environment, when various services are provided, a terminal may access multiple network slices. A network function (NF) described above may be implemented as a network element as a software instance running on hardware, or as a virtualized function instantiated on an appropriate platform.

A network resource in the disclosure may indicate a network function (NF), a logical resource provided by the NF, or wireless resource allocation of a base station. For example, a mobile communication service provider may configure network slice A to provide a mobile broadband service, configure network slice B to provide a vehicle communication service, and configure network slice C to provide an IoT service. That is, as described above, in a 5G network, a corresponding service may be efficiently provided to a terminal through a network slice specialized to be suitable for the characteristic of each service.

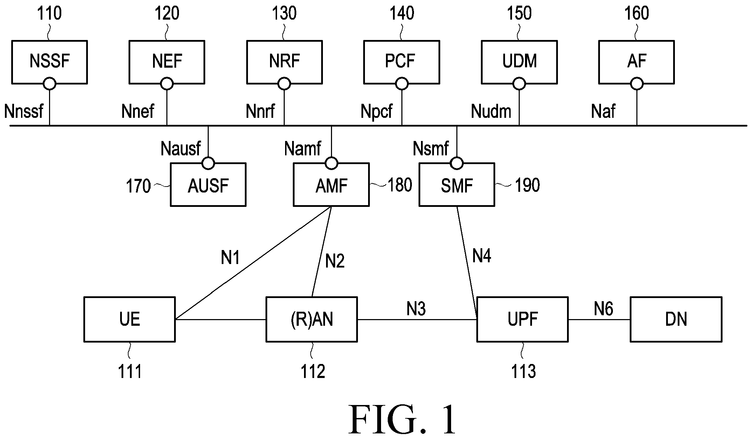

FIG. 1 is a diagram illustrating a structure of a wireless communication system for a 5G system according to various embodiments of the disclosure.

In the disclosure, a network technology may refer to a standard specification (e.g., TS 23.501, TS 23.502, TS 23.503, etc.) defined by the international telecommunication union (ITU) or 3GPP, and each element included in a network structure of FIG. 1 may indicate a physical entity, or software performing an individual function or hardware combined with the software. In FIG. 1, reference numerals represented by Nx, such as N1, N2, N3, ..., etc., indicate known interfaces between NFs in a 5G core network (CN), and a relevant description may refer to a standard specification (TS 23.501) and thus a detailed description will be omitted. Furthermore, in the following description of FIG. 1, illustration/description of NFs having no direct relation with the disclosure will be omitted.

Referring to FIG. 1, a 5GS may include a new radio (NR) base station (radio access node (NG-RAN), radio access network (RAN), or next generation node B (gNB)) 112 for wireless access of a terminal (LTE) 111, an access management function (AMF) 180, a session management function (SMF) 190, a user plane function (UPF) 113, an application function (AF) 160, an authentication server function (AUSF) 170, a policy control function (PCF) 140, a user data management (UDM) 150, a network slick selection function (NSSF) 110, a network exposure function (NEF) 120, a network repository function (NRF) 130, and a data network (DN).

According to an embodiment of the disclosure, the AMF 180 is a network function (NF) that manages wireless network access and mobility for the terminal. The SMF 190 is an NF that manages a session for the terminal, and session information includes quality-of-service (QoS) information, charging information, and information on packet processing. The UPF 113 is an NF that processes user plane traffic, and is controlled by the SMF 190. The PCF 140 is an NF that manages an operator policy (and/or PLMN policy) for providing a service in a wireless communication system. Additionally, the PCF may be divided into a PCF in charge of an access and mobility (AM) policy and a LTE policy, and a PCF in charge of a session management (SM) policy. The PCF in charge of the AM/UE policy and the PCF in charge of the SM policy may be NFs logically or physically separated from each other, or an NF that is logically or physically one. The UDM 150 is an NF that stores and manages subscriber information of the terminal (UE subscription). A unified data repository (hereinafter, UDR) is a database (DB) or NF that stores and manages data. The UDR may store subscription information of the terminal and provide the subscription information of the terminal to the UDM. In addition, the UDR may store operator policy information and provide the operator policy information to the PCF. The NSSF 110 may be an NF that functions to select network slice instances that provides a service to the terminal, or determine network slice selection assistance information (NSSAI).

The instance may mean a state where an NF exists in a software code type, and in order to perform a function of an NF on a physical computing system (e.g., a specific computing system present on a core network), a physical and/or logical resource is allocated from the computing system and the function of the NF is executable. For example, an AMF instance, an SMF instance, an NSSF instance, etc. may mean a state where a physical and/or logical resource is allocated for operation of the AMF, the SMF, the NSSF, etc. from a specific computing system present on a core network, and is available. Therefore, the same operation may be performed in a case where physical AMF, SMF, and NSSF devices are present, and in an AMF instance, an SMF instance, and an NSSF instance that are allocated physical and/or logical resources for AMF, SMF, and NSSF operations from a specific computing system present on a network, and use same.

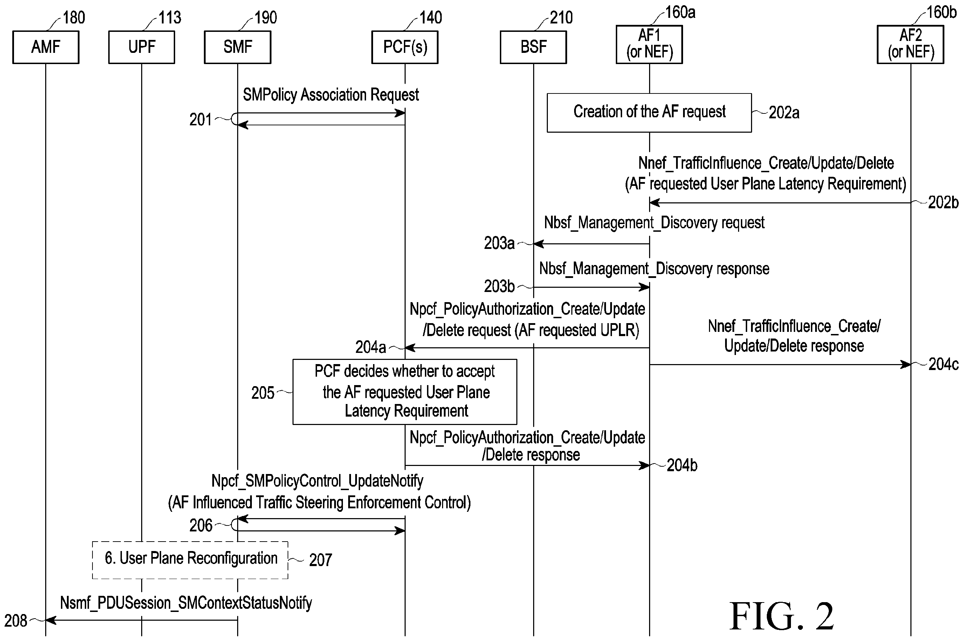

FIG. 2 is a diagram illustrating a procedure of use permission and approval for a user plane latency requirement in a PCF according to various embodiments of the disclosure.

First, service operations related to a PDU session among NF services provided by a session management function (SMF) that manages a session are defined as shown in <Table 1> below in a 5G standard (TS 23.502).

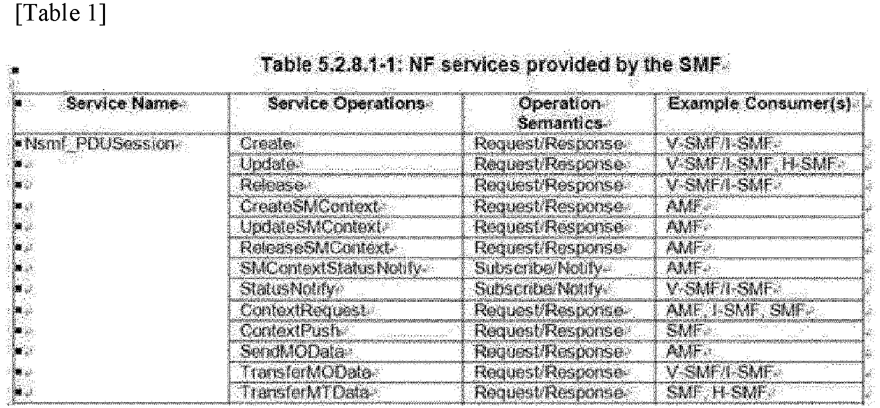

A 5G system structure of FIG. 2 supports service-based interfaces, and a service-based interface related to the SMF is defined as "Nsmf" as illustrated in <Table 1> above. The name "Nsmf_PDUSession" in <Table 1> above means a service operating in a PDU session, the service includes creation/removal/modification operations for a PDU session, and these operations may be performed through transmission or reception of a PDU session request/response message between an AMF and the SMF. As in an example of <Table 1> above, the SMF may receive a "Nsmf_PDUSession_CreateSMContext" request message that is a PDU session request message from the AMF and transmit a "Nsmf_PDUSession_CreateSMContext" response message to the AMF as a response thereof, as an association create operation between the AMF and the SMF for PDU session support. Other service operations in <Table 1> above may refer to a relevant standard, and a detailed description is omitted.

Service operations related to a policy among NF services provided by a policy control function (PCF) that manages a policy are defined as shown in <Table 2> below in a 5G standard (TS 23.502).

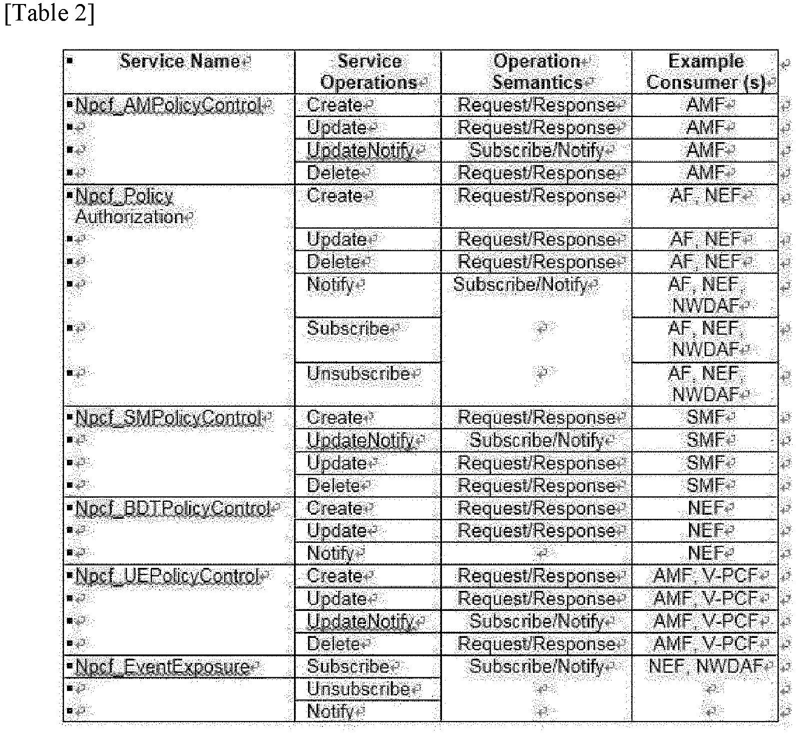

In <Table 2>, "Npcf_PolicyAuthorization" provides a service that approves a policy requested by an AF, and the service includes operations, such as creation/removal/registration of a policy. Other service operations in <Table 2> above may refer to a relevant standard, and a detailed description is omitted.

FIG. 2 illustrates a procedure in which the AF 160 requests a requirement for user plane latency (hereinafter, UPL) (UPL requirement, hereinafter, UPLR), and a 5GC network grants a use permission therefor.

First, the 5GC network may determine whether the AF 160 has received a use permission enabling to request a user plane latency time, identify whether a request for a user plane latency time made by the AF 160 has contents suitable for a right given to the AF 160, and determine whether the request is performable.

According to an embodiment of the disclosure, the subject of granting a use permission for a request of the AF 160 in the 5GC is the PCF 140. The PCF 140 may determine whether to approve use of the UPL requested by the AF 160, based on configuration information of an operator, and a PDU session of the terminal 111 and capability information of the SMF 190 which are received from the SMF 190. As a result of determination of use approval by the PCF 140, the PCF 140 may transfer, to the SMF, information on the UPL and information for steering traffic, and the SMF 190 may select or reselect a PSA-UPF, based on information received from the PCF 140.

The terminal 111 may request a PDU session from the SMF 190, and the SMF 190 may receive a PDU session request. The SMF 190 may transfer an SM Policy Association request message to the PCF 140, based on the received PDU session request (operation 201). The PCF 140 may receive the SM Policy Association request message received via the SMF 190 in operation 201, or the PCF 140 may recognize information on the SMF 190 by using pre-configured information in the SMF 190. The information which may be recognized by the PCF 140 in advance is as follows.
1) Whether the SMF supports UPL (estimated UPL (EUPL), hereinafter, EUPL) information estimated/expected for each UPF
2) Service and session continuity (hereinafter, SSC) mode information synthesized for a PDU session of the terminal 111

In operation 202a, the AF 160 generates a UPLR, and a procedure of requesting same is described.

The AF 160 operating as an orchestrator may make an agreement to ensure smaller latency for an application program sensitive to latency through a preliminary agreement of an application service provider, and a maximum allowed latency time required to be satisfied in a user plane of the 5GC may have been configured for each edge application server (EAS) (hereinafter, EAS). AF 160 is already aware of an application program to which a smaller latency time provided by EASs sensitive to latency is more important than other QoS parameters, and information enabling distinguishment of traffic flowing toward the application program, and the AF 160 may make a request of selecting a PSA preferentially considering latency for the traffic of the application program.

The AF 160 may be aware of a user plane latency requirement (UPLR) required by an application program. The UPLR may include the configuration as follows.
1) Maximum allowed user plane latency time (maximum allowed user plane latency)
2) AF preference for shortest UPL (user plane latency time preference indicator)

The maximum allowable user plane latency time means a latency time taken from the terminal 111 to a PDU session anchor (PSA) in the user plane. The SMF 190 may perform the following operations for a PDU session for which a maximum allowed user plane latency time is configured.
1) The SMF 190 may select, in consideration of the latency time, a PSA that does not exceed the latency time for traffic received together with a UPLR, or when the selected PSA is different from a current PSA, may determine PSA relocation.
2) When a latency time exceeds the maximum allowed user plane latency time, the SMF may request a notification from the AF.
3) When a PSA UPF is selected, if the SMF is able to recognize an expected UP latency time of the PSA UPF, the SMF selects a PSA having an expected UP latency time smaller than the maximum allowed UP latency time.

The AF preference indicator is an indicator showing preference of a UPL having a smaller value. The AF operating as an orchestrator may make an agreement to ensure smaller latency for an application program sensitive to latency through a preliminary agreement of an application service provider, and may request to select a PSA preferentially considering latency for traffic of the application program.

AF1 160a may directly transmit an AF request to the PCF 140 or transmit same via an NEF. In a case where an AF request is directly transmitted, AF1 160a may transmit an Nbsf_Management_Discovery request message to a binding supporting function (hereinafter, BSF) 210 to find the PCF 140 (operation 203a). AF1 160a may receive, as a response for Nbsf_Management_Discovery, an Nbsf_Management_Discovery response message including information of the PCF 140 from the BSF 210 (operation 203b). AF1 160a may transmit an Npcf_PolicyAuthorization_Create/Update/Delete request message to the PCF 140, based on the received information of the PCF 140 (operation 204a). The Npcf_PolicyAuthorization_Create/Update/Delete request message may include an AF request UPLR.

In a case where an AF request is transferred via the NEF, AF2 160b transfers a generated AF request to the NEF 160a. The NEF 160a may transmit an Nbsf_Management_Discovery request message to the BSF 210 to find the PCF 140 (operation 203a). The NEF 160a may receive, as a response for Nbsf_Management_Discovery, an Nbsf_Management_Discovery response message including information of the PCF 140 from the BSF 210 (operation 203b). The NEF 160a may transmit an Npcf_PolicyAuthorization_Create/Update/Delete request message to the PCF 140, based on the received information of the PCF 140 (operation 204a). The Npcf_PolicyAuthorization_Create/Update/Delete request message may include an AF request UPLR.

According to an embodiment, in a case where an IP address of a terminal is known to an AF, the AF may request Policy_Authorization from a PCF, and the AF may transfer a request for finding a PCF to a BSF in order to find a PCF in charge of a policy for a PDU session of the terminal. The BSF receives the request, searches for the PCF by using the IP address of the terminal, and transfers a message including an address of the PCF to respond to the AF.

After receiving an AF request, the PCF 140 determines whether to grant a use permission for a UPL requirement (operation 205). In operation 204a, the PCF 140 receives an Npcf_PolicyAuthorization_Create/Update/Delete request message including UPLR information from AF1 160a or the NEF 160a.

In a case where a request is received from AF1 160a having asked, the PCF 140 may identify whether AF1 160a having asked, is pre-configured as an NF capable of transmitting a UPLR.

The PCF 140 determines whether AF1 160a having asked has a right.
1) The PCF 140 may identify and determine whether AF1 160a or the NEF 160a having asked is pre-configured as an NF capable of transmitting a UPLR.
2) The PCF 140 may identify the following contents with respect to a requested PDU session of the UE 111, so as to determine whether the request is acceptable. The PCF 140 may determine whether the SMF 190 in charge of a session requested by the terminal 111 is able to recognize an expected or estimated UPL for a PSA UPF to which the terminal is movable. The PCF 140 may receive an indicator relating to whether the SMF 190 is an SMF supporting EUPL, from the SMF 190 in operation 201, and determine same. According to an embodiment of the disclosure, the PCF 140 may recognize whether the SMF 190 supports EUPL, from pre-configured information. The PCF 140 may determine, using pre-configured information or information received in operation 201, whether a connectivity model of the session is a session break out model, that is, a session capable of supporting insertion/replacement of a local UPF. The PCF may determine whether the session is SSC mode 2 or SSC mode 3 and a connectivity mode is a distributed anchor point. The PCF 140 may determine, using pre-configured information or SSC mode information received from the SMF 190 in operation 201, whether a connectivity mode of the session is a distributed anchor point. Hereinafter, a detailed description related to a connectivity model will be described.

After the PCF 140 determines whether a use permission for an AF request is granted and whether the request is performable, the PCF 140 may determine to accept or reject a request UPLR. When it is determined that the SMF 190 is able to perform a request for a UPLR, the PCF 140 may determine to accept the UPLR. For example, in a case where the SMF 190 is able to know information on a EUPLR for a requested data network access identifier (hereinafter, DNAI), or is configured to be able to receive a UPLR request, the PCF 140 accepts a request for a UPLR.

When it is determined that the SMF 190 is unable to perform a request for a UPLR, the PCF 140 may determine to reject the UPLR. For example, in a case where the SMF 190 is unable to obtain information on a EUPLR for a DNAI, the PCF 140 may reject a request for a UPLR. In a case where the SMF 190 in charge of a current session is unable to support a EUPLR, the current session is negotiated as SSC mode 2 or SSC mode 3, and the other available SMF 190 is able to support a UPLR request, the PCF 140 may determine change of the SMF 190. The PCF transfers a policy indicating replacement of the SMF 190 to the SMF 190.

When the PCF 140 accepts a request for a UPLR, the PCF may transmit, to the SMF 190, an Npcf_SMPolicyControl_UpdateNotify message including an AF-influenced traffic steering enforcement policy including the UPLR (operation 206). The AF-influenced traffic steering enforcement policy includes the following information.
1) Information enabling identification of traffic exchanged between the terminal and an EAS
2) User plane latency requirement (ULLR): UPLR information may further include detailed information as follows.
   - Maximum allowed user plane latency requirement
   - AF preference indicator for user plane latency
   - Minimum UPF selection indicator required by AF for user plane latency
3) DNAI information

The SMF 190 having received information from the PCF 140 may change a PSA UPF or select the UPF 113. When a DNAI is changed or when UPF relocation for UPLR satisfaction is determined, the SMF 190 selects the UPF 113.
(1) If only a maximum allowed UP latency value is included in the UPLR,
   ① the SMF identifies whether a EUPL value for a potential UPF corresponding to a DNAI is equal to or smaller than the maximum allowed UP latency value (1) configured in the UPLR
   (2) the SMF 190 selects one of UPFs considering network topology, a connected RAN node, an SMF service area, UPF service area, etc.
(2) If there is only an AF preference for low latency UP indicator, the SMF 190 selects one of UPFs considering network topology, a connected RAN node, an SMF service area, UPF service area, etc.

(1)+(2) If there are both maximum allowed UP latency and AF preference for UPL, when multiple UPFs satisfy the criterion of (1) among UPFs considering network topology, a connected RAN node, an SMF service area, UPF service area, etc., the SMF 190 preferentially selects a UPF having the smallest EUPL thereamong.

When the SMF 190 determines UPF relocation and a target UPF 1130 satisfies a UPLR, the SMF 190 may transmit, to the AMF 180, an early notification including a result value indicating whether the UPLR is satisfied (operations 207 and 208). The SMF 190 may include an estimated user plane latency value between the terminal of the target UPF and the target UPF in the notification indicating whether the UPLR is satisfied, and transmit the value and the notification.

When the SMF 190 determines UPF relocation and performs edge relocation, and then the target UPF 113 satisfies a UPLR, the SMF 190 may transmit a late notification including a result value indicating whether the UPLR is satisfied. The SMF 190 may include an estimated UPF value of the target UPF 113 in the notification indicating whether the UPLR is satisfied, and transmit the value and the notification.

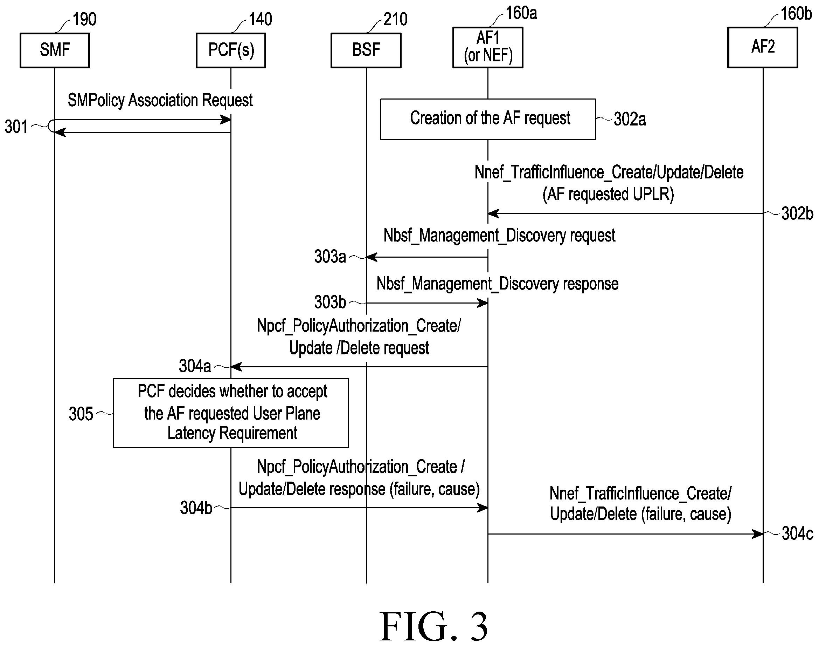

FIG. 3 is a diagram illustrating a procedure of use permission and approval for a user plane latency requirement in a PCF according to various embodiments of the disclosure.

According to various embodiments of the disclosure, a 5GC network determines whether an AF is an AF that has received a use permission enabling to request a user plane latency time, identifies whether a request for a user plane latency time made by the AF has contents suitable for a right given to the AF, and determines whether the request is performable.

According to an embodiment, the subject of granting a use permission for an AF request in the 5GC is the PCF 140. The PCF 140 may determine whether to approve use of UPL requested by the AF, based on configuration information of an operator, and a PDU session of a terminal and capability information of the SMF 190 which are received from the SMF 190. As a result of determination of use approval by the PCF 140, the PCF 140 rejects the request of the AF. In a case of rejection, the PCF may transfer a response message including a result value (i.e., rejection) for an approval request and a reason for the rejection to the AF or an NEF having asked.

Referring to FIG. 3, operation 301 to operation 304a are the same as operation 201 to operation 204a in FIG. 2.

According to an embodiment, operation 305, the PCF 140 may reject an AF request. When it is determined that the SMF 190 is unable to perform a request for a UPLR, the PCF 140 may determine to reject the UPLR. For example, in a case where the SMF 190 is unable to obtain information on a EUPLR for a DNAI, the PCF 140 may reject a request for a UPLR.

In a case where the PCF rejects the request, as a response for an Npcf_PolicyAuthorization_Create/Update/Delete request message received in operation 304a, the PCF may transmit, to AF1 160a, an Npcf_PolicyAuthorization_Create/Update/Delete response message including a result value notifying of rejection and a reason for the rejection. The reason for the rejection may include the following contents.
1) A maximum allowed UP latency value of a UPLR request is too small, and thus a UP satisfying the requested value is unprovidable
2) A function preferentially considering a UP latency time is not provided
3) A requested UP latency time is temporarily unprovidable
4) A UPLR function is not provided in a region in which a current terminal is positioned
5) The AF having asked has no right to request a UPLR function

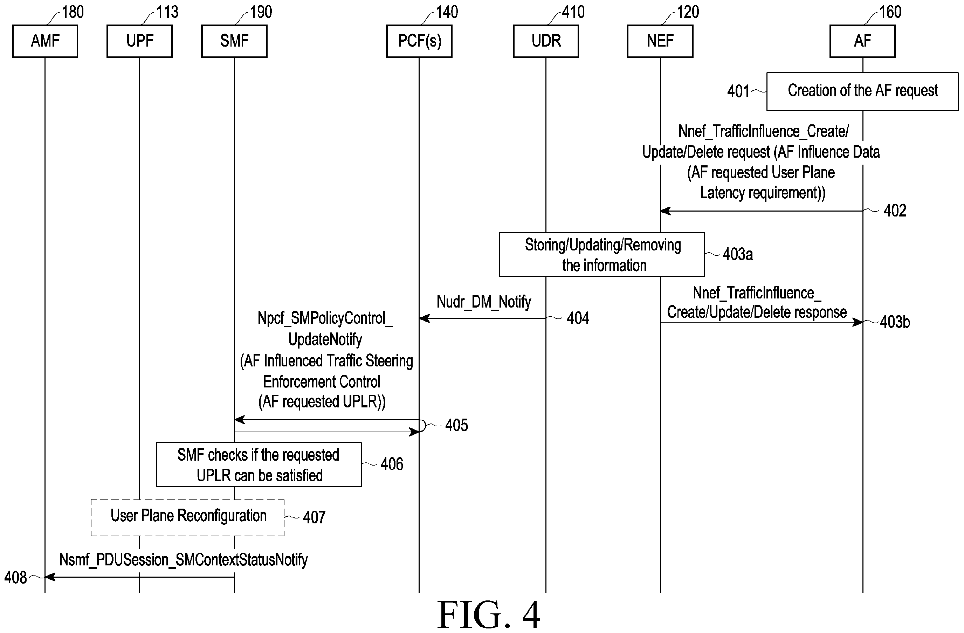

FIG. 4 is a diagram illustrating a procedure of use permission and approval for a user plane latency requirement in a 5GC network according to various embodiments of the disclosure.

A 5GC network determines whether an AF is an AF that has received a use permission enabling to request a user plane latency time, identifies whether a request for a user plane latency time made by the AF has contents suitable for a right given to the AF, and determines whether the request is performable.

According to this embodiment, the subject of granting a use permission for an AF request in the 5GC is the NEF 120. The NEF 120 may determine whether to approve use of UPL requested by the AF 160, based on configuration information of an operator. The NEF 120 primarily inspects the AF request and then stores the AF request in the UDR 410, and the UDR 410 transfers, to the PCF 140, a notification indicating that stored information has been modified. The PCF 140 receives the AF request including a UPLR, and transfers same to the SMF 190. The SMF 190 identifies whether the AF request is satisfiable, through estimated UPL information, DNAI information, and a traffic steering rule for UPFs managed in the SMF 190. The SMF 190 determines whether the AF request is satisfiable. The SMF 190 may determine whether the SMF is able to perform traffic steering including local UPF addition or UPF reselection satisfying the UPL requirement.

According to an embodiment, when it is determined that traffic steering satisfying a UPLR according to an AF request is possible, the SMF 190 performs same. A procedure performed by the SMF 190 may be as follows.
1) Procedure of UPF reselection at the time of DNAI change (SSC mode 2 or SSC mode 3 operation)
2) Procedure of addition, change, and removal of a local UPF
3) Transfer of, to the AMF for SMF reselection, a notification message including an SMF reselection request enabling satisfaction of the request including the UPLR. The SMF reselection request may be an indicator notifying that SMF reselection is needed, an UPRL included in the AF request, an SMF identifier, and DNAI information.

Referring to FIG. 4, operation 401 in FIG. 4 is the same as operation 201a in FIG. 2. The AF 160 generates an AF request as in operation 201a of FIG. 2 (operation 401). The AF 160 transmits, to the NEF 120, an Nnef_TrafficInfluence_Create/Update/Delete request message including the AF request. The NEF 120 having received the Nnef_TrafficInfluence_Create/Update/Delete request message including the AF request identifies whether the AF 160 is an AF capable of making an UPLR request, an AF registered in advance, or an AF having a right to use an UPLR, through information of an authentication token included in the request, and determines whether to grant a use permission for the AF request (operation 303a). When a use permission for the AF request is not granted, the NEF 120 may determine to reject the request. When the NEF 120 determines to reject the request, the NEF may transmit an Nnef_TrafficInfluence_Create/Update/Delete response message including a result value indicating that the request has failed as a result value for the result showing whether the AF request is accepted, and a reason why the request has not been accepted (operation 303b). An example of the reason why the request has not been accepted may be the same as the following values.
1) A maximum allowed UP latency value of a UPLR request is too small, and thus a UP satisfying the requested value is unprovidable
2) A function preferentially considering a UP latency time is not provided
3) A requested UP latency time is temporarily unprovidable
4) The AF having asked has no right to request a UPLR function

When the NEF 120 determines to accept the AF request, the NEF 120 may store the AF request in the UDR 410 (operation 303a). The UDR 410 in which the AF request is stored transmits a Nudr_DM_Notify message to the PCF 140 (operation 304).

The PCF 140 may determine whether to grant a use permission for the AF request. In order for the PCF 140 to determine whether to grant a use permission for the AF request, the PCF 140 may perform operations described in the first embodiment. When the PCF 140 determines to grant a use permission, the PCF 140 may generate a PCC policy including a rule for traffic steering including the contents of the AF request and transfer the PCC policy to the SMF 190, as in operation 205 of FIG. 2 and operation 305 of FIG. 3. If the PCF determines to reject the use permission, the PCF 140 may respond to the NEF 120 or directly respond to the AF 160 so as to notify a reason why the AF request is unsatisfiable, to the AF 160 or via the NEF 120. When the PCF directly responds to the AF 160, an address to which a response message is transmitted may be an address for receiving a notification message included in the AF request.

The PCF 140 transfers an AF influenced traffic steering rule including the contents of the AF request to the SMF 190 (operation 405).
1) The SMF 190 having received a UPLR may request analysis information from a network data analytics function (hereinafter, NWDAF) from the NWDAF in order to recognize a value for EUPL.
2) The SMF 190 receives an AF influenced traffic steering rule including a UPLR from the PCF 140, and identifies whether the SMF is able to perform the requested ULPR (operation 406).
   In operation 406, the SMF 190 having received the traffic steering rule may identify the following contents with respect to a requested PDU session of the UE, so as to determine whether the request is acceptable.
3) The SMF 190 determines whether the SMF is able to know EUPL. The SMF 190 may receive analysis information on the NWDAF from the NWDAF to recognize information on EUPL for each NDAI. The SMF 190 may recognize a DN performance matrix by requesting the NWDAF. The SMF 190 may recognize EUPL by directly calculating same, based on information reported by a UPF connected via N4. For example, the SMF 190 may autonomously store UPF reporting information, and presume and store EUPL information, based on statistical information of the UPF reporting information. The SMF 190 may know EUPL information on a UPF connected via N4, which is preconfigured. The SMF 190 may be aware of EUPL information on the UPF by obtaining same in a UPF discovery process through an NRF.
4) The SMF 190 may determine, using pre-configured information, whether a connectivity model of the session is a session break out model, that is, a session capable of supporting addition and replacement of a local UPF. For example, the SMF 190 determines whether the session is SSC mode 2 or SSC mode 3 and a connectivity mode is a distributed anchor point.

After receiving an AF request traffic steering rule including a requested UPL requirement, the SMF 190 determines whether the UPL requirement is satisfiable (operation 406).

When the SMF 190 determines that the SMF is able to perform a request for the UPLR, the SMF 190 may determine to accept the UPLR. For example, in a case where the SMF 190 is able to recognize information on a EUPLR for a requested DNAI, the PCF accepts a request for the UPLR.

The SMF 190 may perform UPF relocation satisfying the UPL requirement. When a DNAI is changed due to movement of the terminal, the SMF 190 may perform UPF reselection. In a case where the SMF 190 performs UPF reselection, the SMF may determine whether to perform UPF reselection according to a maximum allowed UP latency value and an AF preference value included in the UPL requirement. When it is determined that a PSA UPF currently used by the terminal is able to satisfy required user plane latency, the SMF 190 may not determine UPF relocation. When the current PSA UPF fails to satisfy a required UPL requirement and is connected to the SMF 190, and an expected latency value of a PSA UPF corresponding to a DNAI supportable at the location of the terminal 111 is able to satisfy the UPL latency requirement, the SMF 190 may determine PSA relocation. Operations after determining UPLR accept is the same as operation 207 and operation 208 in FIG. 2.

When the SMF 190 determines that the SMF is unable to perform a request for the UPLR, the SMF may determine to reject the UPLR. For example, in a case where the SMF 190 is unable to obtain information on EUPL for a DNAI, the SMF may reject a request for the UPLR.

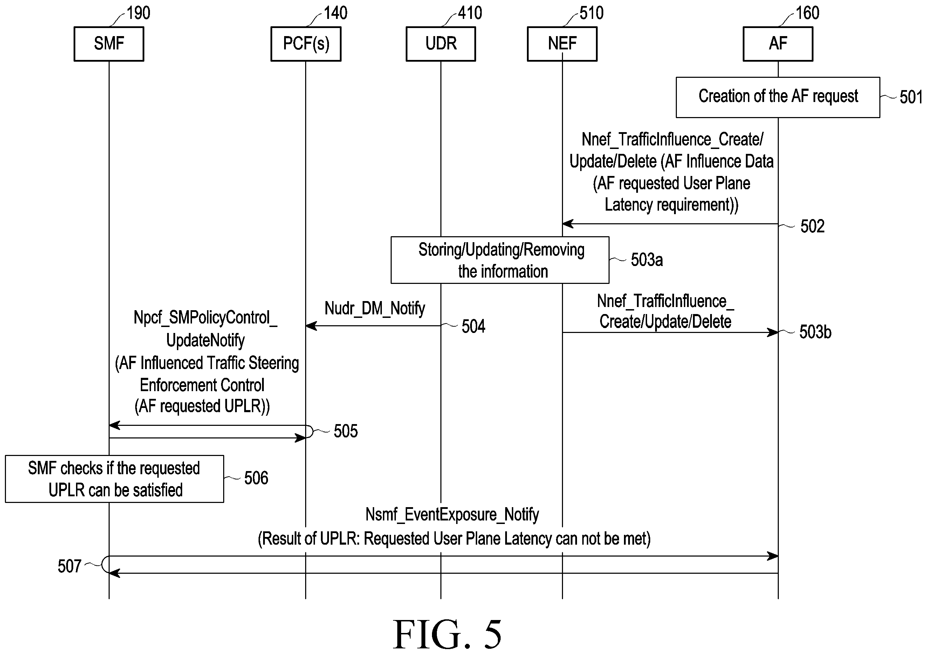

FIG. 5 is a diagram illustrating an operation performed by an SMF when a requested UPLR is satisfied according to various embodiments of the disclosure.

Referring to FIG. 5, operation 501 to operation 505 are the same as operation 401 to operation 405 in FIG. 4.

When the SMF 190 determines that performing of a UPLR is impossible, from an edge computing connectivity mode (ECCM) and estimated user plane latency (EUPL) information described above (operation 506), the SMF 190 may notify, via the NEF 510, an AF of a message including information indicating that a UPLR request is unable to be performed (operation 507).

In a case where the current SMF 190 does not support EUPL and a negotiated service and session continuity (SSC) mode is SSC mode 2 or 3, the SMF 190 may determine SMF relocation and perform an SMF relocation procedure (SSC mode 2 or SSC mode 3 procedure).

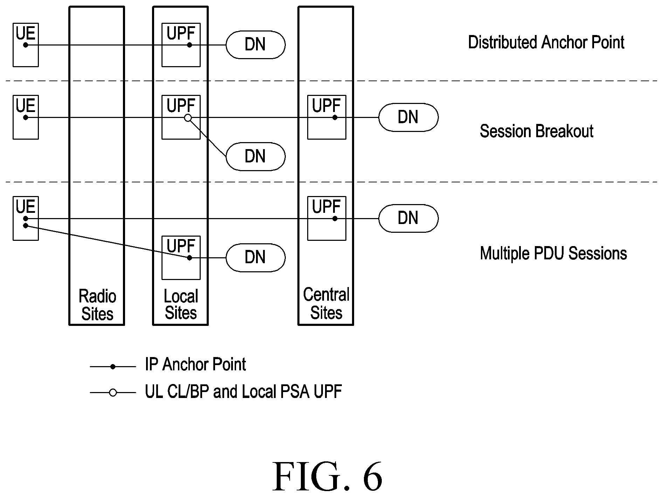

FIG. 6 illustrates types of edge computing connectivity according to various embodiments of the disclosure. According to the type of edge computing connectivity, the type of an operation of an SMF may be classified.

The type of edge computing connectivity may be classified as follows. The type of edge computing connectivity indicates an edge computing connectivity mode.

### 1) Distributed anchor point model (distributed anchor point)

In a case where a network for supporting edge computing provided in a 5GC is a distributed anchor model, a PSA UPF is located at a local site close to the location of a terminal, and when the terminal moves or uses a PDU session negotiated as SSC mode 2/3, the PSA UPF is changeable according to the movement of the terminal.

### 2) Session breakout model (session breakout)

In a case where a network for supporting edge computing provided in a 5GC is a session breakout model, a PDU session has a central PSA UPF (C-PSA UPF) in a centralized site and a local PSA (L-PSA) in a local site. The C-PSA UPF provides an IP anchor point in a session using an uplink classifier (LTLCL). In the session breakout model, edge computing application traffic may be selectively diverted to an L-PSA UPF by using the ULCL or multi-homing branching point technology. The L-PSA UPF may be changed due to movement of the terminal.

### 3) Multi-PDU session model (multiple PDU sessions)

In a case where a network for supporting edge computing provided in a 5GC is a multi-PDU session model, an edge computing application is connected to a DN of a local site through a PDU session passing through a PSA UPF at the local site.

Applications other than the edge computing application are connected to a DN through a PDU session passing through a centralized C-PSA UPF.

An L-PSA UPF may be changed due to movement of the terminal. In addition, the L-PSA UPF may be changed using SSC mode 2 or SSC mode 3.

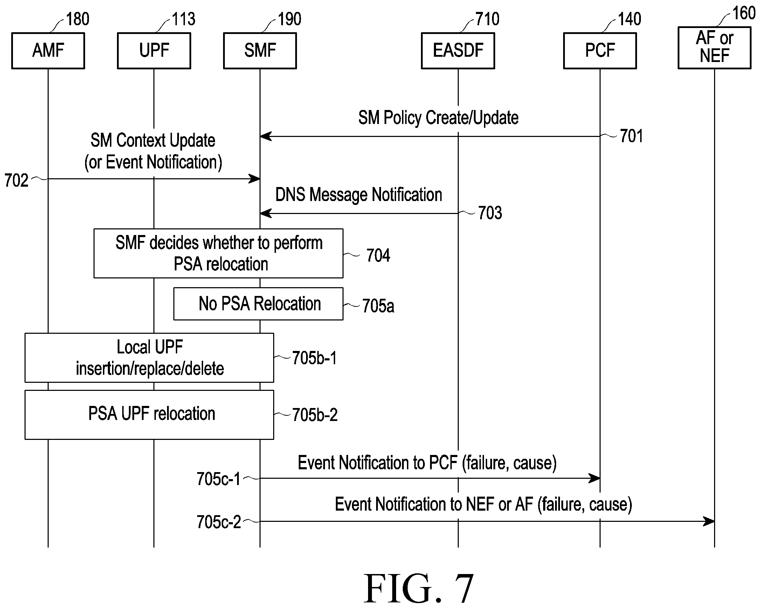

FIG. 7 is a diagram illustrating a method in which an SMF determines whether to perform PSA UPF addition and replacement after receiving a UPL requirement, and selects a PSA UPF at the time of PSA UPF replacement according to various embodiments of the disclosure.

After receiving an SM Policy Create/Update message including a traffic steering rule generated by an AF request from the PCF 140, the SMF 190 identifies a traffic steering rule for a DNAI corresponding to the current location of the terminal 111 (operation 701).

The SMF 190 may receive, from the AMF 180, an SM Context Update message including a request of updating a PDU session according to movement of the terminal 111. According to an embodiment, the SMF 190 may receive a notification of the location change of the terminal 111 from the AMF 180. The SMF 190 detects a DNAI change caused by the movement of the terminal 111.

The SMF 190 receives a notification message (DNS message notification) for reception of a DNS response message from an edge application server discover function (hereinafter, EASDF) 710. The SMF 190 may detect a need for PSA addition or change corresponding to the DNAI (operation 703).

The SMF 190 identifies an edge computing model. The SMF 190 identifies whether the PDU session is a PDU session to which an uplink classifier/branching point (hereinafter, ULCL/BP) is applied, or a PDU session negotiated as SSC mode 2 or SSC mode 3 (operation 704).

When the PDU session is a PDU session to which a ULCL/BP is applicable (e.g., a session breakout model may be provided as an edge computing model provided to the terminal), the SMF 190 may determine PSA addition or replacement to allow access a local part of a DN corresponding to the DNAI. When the SMF 190 determines to add a local PSA, the SMF identifies estimated UPL for the current C-PSA and an L-PSA to be added. When the PDU session is a PDU session to which a ULCL/BP is applicable, the SMF 190 identifies estimated UPL of an L-PSA providing traffic corresponding to the current AF traffic request, and an L-PSA to be added.

When the current PDU session is a PDU session supporting SSC mode 2 or SSC mode 3 (e.g., an edge computing model provided to the terminal is a distributed anchor model), the SMF 190 may determine whether to perform UPF relocation. In order to determine whether to perform relocation, the SMF 190 identifies estimated UPL of a current PSA and target PSAs to be substituted.

In a case where the current PDU session is configured to support SSC mode 2 or SSC mode 3 even when the session is a model supporting a multi-session model, the SMF may provide PSA UPF relocation provided in SSC mode 2 or SSC mode 3.

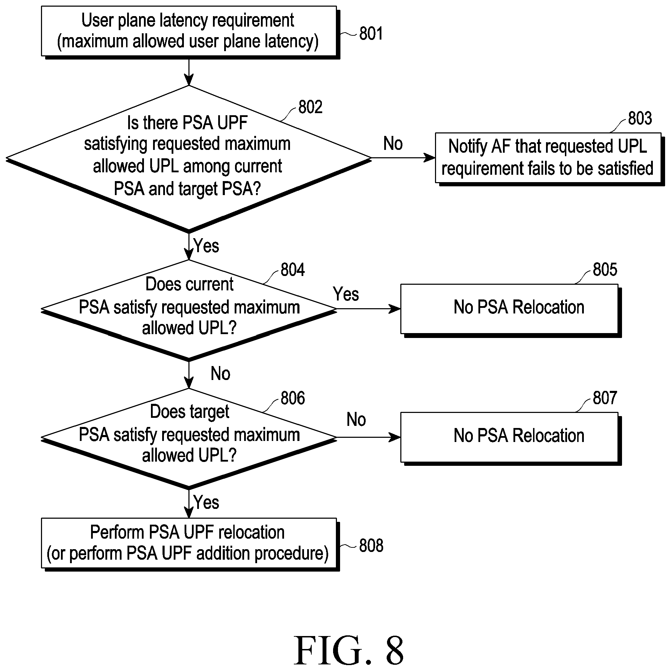

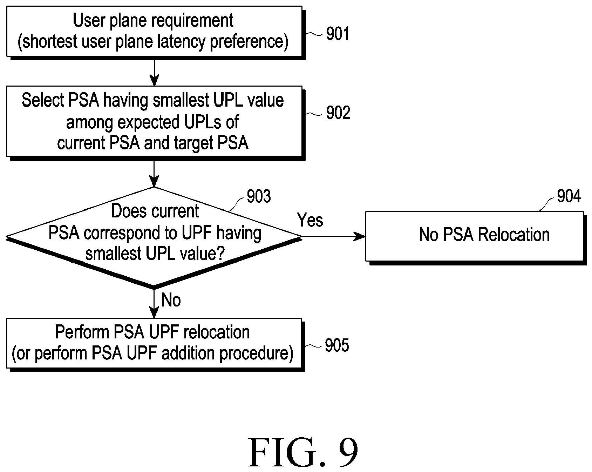

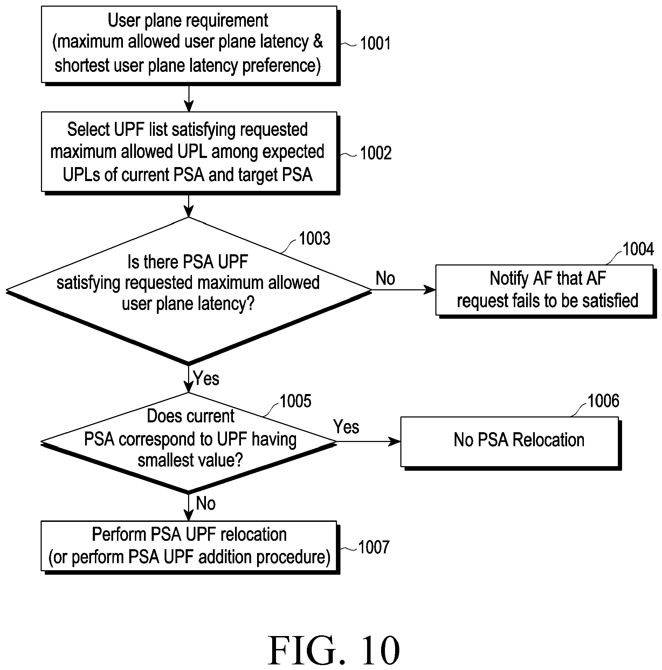

The SMF 190 may perform the following operations according to a mode supported by the currently managed PDU session or an edge computing connectivity model provided to the terminal, whether a UPL requirement received by the SMF 190 is satisfiable, and a requirement in the UPL (operation 705).
1) The SMF does not perform a UPF relocation operation.
2) The SMF performs local PSA addition or replacement (operation 705B-1).
3) The SMF performs PSA relocation (operation 705B-2).
4) The SMF transfers a notification indicating that the requested UPL fails to be satisfied, to a PCF and an NEF or an AF (operation 705C-1 and operation 705C-2).
   The operations of the SMF 190 described above may be determined according to an AF-requested requirement, a current PDU session, the SMF's own configuration value, and a policy of an operator. Detailed operations of the SMF 190 according to a value included in a requirement requested by the AF 160 may be classified as three cases as follows according to the UPL requirement, and SMF operations of each case will be described with reference to an individual drawing.
5) A case where only maximum allowed UPL exists in the UPL requirement is described with reference to FIG. 8.
6) A case where only a minimum latency preference indicator is included in the UPL requirement is described with reference to FIG. 9.
7) A case where maximum allowed UPL and a minimum latency preference indicator are both included in the UPL requirement is described with reference to FIG. 10.

FIG. 8 is a flowchart illustrating an SMF operation for a case when there is only maximum allowed UPL in a UPL requirement requested by an AF according to various embodiments of the disclosure.

The SMF 190 inspects whether a PSA UPF satisfying requested maximum allowed UPL exists among a current PSA and a target PSA (operation 802). If both of the current PSA and the target PSA do not satisfy a UPL requirement requested by the AF, the SMF transfers a notification indicating that the requested UPL is not satisfied, to the PCF 140 and the NEF or the AF 160 (operation 803).

When the SMF 190 determines that the current PSA is able to satisfy the requested maximum allowed UPL (operation 804), the SMF may not determine PSA relocation (operation 805).

When the current PSA does not satisfy the requested maximum allowed UPL (operation 804) and a target PSA UPF corresponding to a DNAI according to the location of the terminal 111 satisfies the requested maximum allowed UPL (operation 806), the SMF 190 may perform PSA UPF relocation (operation 808). When the current PSA does not satisfy the requested maximum allowed UPL (operation 804) and a target PSA UPF corresponding to a DNAI according to the location of the terminal 111 fails to satisfy the requested maximum allowed UPL (operation 806), the SMF 190 may not determine PSA relocation (operation 807).

FIG. 9 is a flowchart illustrating an SMF operation for a case when only a minimum latency preference indicator is included in a UPL requirement requested by an AF according to various embodiments of the disclosure.

In a case where only a minimum latency preference indicator exists in a UPL requirement, the SMF 190 may determine whether to perform PSA relocation. The SMF 190 may select a PSA having the lowest UPL among expected UPLs of a current PSA and a target PSA (operation 902).

The SMF 190 determines whether the current PSA is a UPF having the smallest expected UPL value (operation 903). When the current PSA is a UPF having the smallest expected UPL value (operation 903), the SMF may not determine PSA relocation (operation 904).

When the current PSA is not a UPF having the smallest expected UPL value, and the target UPF is the UPF having the smallest UPL (operation 903), the SMF 190 may determine PSA relocation (operation 905). In this case, the SMF may select a UPF having the smallest expected UPL value among the smallest multiple target UPFs.

FIG. 10 is a flowchart illustrating an SMF operation for a case when a maximum allowed UPL and a minimum latency preference indicator are both included in a UPL requirement requested by an AF according to various embodiments of the disclosure.

The SMF 190 may select a UPF list satisfying a requested maximum allowed UPL among expected UPLs of a current PSA and a target PSA (operation 1002). The SMF 190 determines whether there is a PSA UPF satisfying the requested maximum allowed UPL (operation 1003).

When there is no PSA UPF satisfying the requested maximum allowed UPL (operation 1003), the SMF 190 may notify the PCF 140 and the NEF or the AF 160 that an AF request fails to be satisfied (operation 1004).

When there is a UPF satisfying the requested maximum allowed UPL (operation 1003), the SMF 190 determines whether the current PSA is a UPF having the smallest value (operation 1005). When the current PSA is a UPF having the smallest value (operation 1005), the SMF may determine not to perform PSA relocation (operation 1006).

When the UPF satisfying the requested maximum allowed UPL is not the current PSA (operation 1005), the SMF 190 may determine PSA relocation to a PSA UPF (operation 1007). For example, when the SMF 190 determines a target PSA during PSA relocation, the SMF 190 may select a PSA having the minimum latency.

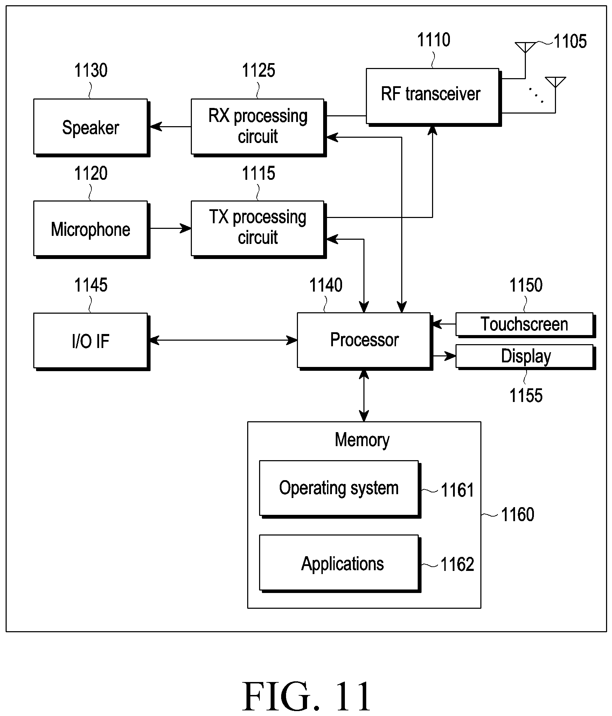

FIG. 11 is a diagram briefly illustrating an example of an internal structure of a terminal in a wireless communication system according to various embodiments of the disclosure.

An embodiment of a terminal illustrated in FIG. 11 is only for an example, and thus FIG. 11 does not limit the scope of the disclosure to a random particular implementation of a terminal.

As illustrated in FIG. 11, a terminal includes an antenna 1105, a radio frequency (RF) transceiver 1110, a TX processing circuit 1115, a microphone 1120, and a receive (RX) processing circuit 1125. The terminal also includes a speaker 1130, a processor 1140, an input/output (I/O) interface (IF) 1145, a touchscreen 1150, a display 1155, and memory 1160. The memory 1160 includes an operating system (OS) 1161 and one or more applications 1162.

The RF transceiver 1110 receives an input RF signal, from the antenna 1105, transmitted by a base station of a network. The RF transceiver 1110 down-converts an input RF signal to generate an intermediate frequency (IF) or baseband signal. An IF or baseband signal is transmitted to the RX processing circuit 1125, and the RX processing circuit 1125 filters, decodes, and/or digitalizes a baseband or IF signal to generate a processed baseband signal. The RX processing circuit 1125 transmits a processed baseband signal to the speaker 1130 (for voice data) or the processor 1140 (for web browsing data) to additionally process same.

The TX processing circuit 1115 receives analog or digital voice data from the microphone 1120, or receives other output baseband data (such as web data, e-mail, or interactive video game data) from the processor 1140. The TX processing circuit 1115 encodes, multiplexes, and/or digitalizes output baseband data to generate a processed baseband or IF signal. The RF transceiver 1110 receives a processed baseband or IF signal output from the TX processing circuit 1115, and up-converts the baseband or IF signal to an RF signal that is transmitted through the antenna 1105.

The processor 1140 may include one or more processors or other processing devices, and may execute the OS 1161 stored in the memory 1160, to control the overall operation of the terminal. For example, the processor 1140 may control reception of downlink channel signals and transmission of uplink channel signals performed by the RF transceiver 1110, the RX processing circuit 1125, and the TX processing circuit 1115 according to known principles. In some embodiments, the processor 1140 includes at least one microprocessor or microcontroller.

In various embodiments of the disclosure, the processor 1140 controls overall operations related to an operation related to a method of supporting selection of a UPF in a 5GC system. That is, the processor 840 controls overall operations related to an operation related to, for example, a method of supporting UPF selection as described with reference to FIG. 1 to FIG 10.

The processor 1140 may move data into the memory 1160 or from the memory 1160 if the movement is required by a process which is running the data. In some embodiments, the processor 1140 is configured to execute the applications 1162 in response to signals received from base stations or an operator or based on the OS program 1161. In addition, the processor 1140 is connected the I/O interface 1145, and the I/O interface 1145 provides the terminal with a connectivity capability for other devices such as laptop computers and handheld computers. The I/O interface 1145 is a communication path between these accessories and the processor 1140.

The processor 1140 is also connected to the touchscreen 1150 and the display unit 1155. The operator of the terminal may input data to the terminal by using the touchscreen 1150. The display 1155 may be a liquid crystal display, a light-emitting diode display, or other displays capable of rendering at least limited graphics and/or text from web sites.

The memory 1160 is connected to the processor 1140. A part of the memory 1160 may include random access memory (RAM), and the remaining part of the memory 1160 may include flash memory or other read-only memory (ROM).

Even though FIG. 11 illustrates an example of a terminal, but various modifications may be applied to FIG. 11. For example, various components of FIG. 11 may be combined with each other, additionally divided, or omitted, and other components may be added according to special needs. Furthermore, as a special example, the processor 1140 may be divided into multiple processors such as one or more central processing units (CPUs) and one or more graphic processing units (GPUs). In addition, even if the terminal in FIG. 11 is configured as a mobile phone or a smartphone, the terminal may be configured to operate as other types of mobile or fixed devices.

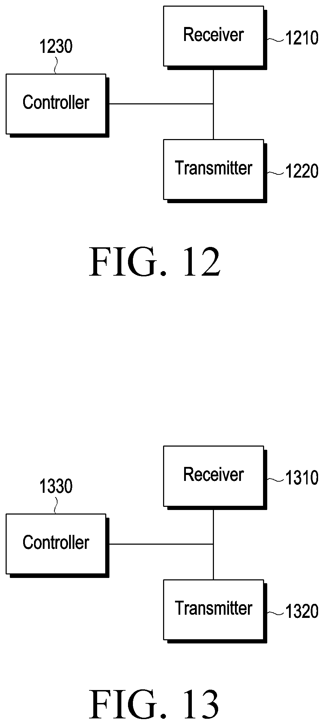

FIG. 12 is a diagram briefly illustrating an internal structure of an SMF according to an embodiment of the disclosure.

Referring to FIG. 12, an SMF 1200 includes a receiver 1210, a transmitter 1220, and a controller 1230. The SMF 1200 of FIG. 12 may have the same configuration as a part or the entirety of the configuration of the SMF 190 in FIG. 1 to FIG. 10. In addition, the SMF 1200 may be implemented to include a processor and a communication interface for communication with other network entity(s) in a core network of a 5G system. Furthermore, the SMF 1200 may be implemented in a server to include a function of the SMF 1200.

The controller 1230 controls overall operations of the SMF 1200, and specifically, controls to perform an operation related to UPF reselection. An operation of controlling the SMF by the controller 1230 is the same as described with reference to FIG. 2 to FIG. 10, and thus the detailed description thereof is omitted here.

The receiver 1210 receives various types of messages or information under control of the controller 1230.

The transmitter 1220 transmits various types of messages or information under control of the controller 1230.

In FIG. 12, the receiver 1210, the transmitter 1220, and the controller 1230 are implemented as separate units, but at least one two of the receiver 1210, the transmitter 1220, and the controller 1230 may be integrated into one. In addition, the receiver 1210, the transmitter 1220, and the controller 1230 may also be implemented as at least one processor.

FIG. 13 is a diagram briefly illustrating an internal structure of a PCF (or AF) according to an embodiment of the disclosure.

Referring to FIG. 13, a PCF (or AF) 1300 includes a receiver 1310, a transmitter 1320, and a controller 1330. The PCF (or AF) 1300 of FIG. 13 may have the same configuration as a part or the entirety of the configuration of the PCF 140 (or the AFs 160a and 160b) in FIG. 1 to FIG. 10. In addition, the PCF (or AF) 1300 may be implemented to include a processor and a communication interface for communication with other network entity(s) in a core network of a 5G system. Furthermore, the PCF (or AF) 1300 may be implemented in a server to include a function of the PCF (or AF) 1300.

The controller 1330 controls overall operations of the PCF (or AF) 1300, and specifically, controls to perform an operation related to UPF reselection. An operation of controlling the PCF (or AF) by the controller 1330 is the same as described with reference to FIG. 2 to FIG. 10, and thus the detailed description thereof is omitted here.

The receiver 1310 receives various types of messages or information under control of the controller 1330.

The transmitter 1320 transmits various types of messages or information under control of the controller 1330.

In FIG. 13, the receiver 1310, the transmitter 1320, and the controller 1330 are implemented as separate units, but at least one two of the receiver 1310, the transmitter 1320, and the controller 1330 may be integrated into one. In addition, the receiver 1310, the transmitter 1320, and the controller 1330 may also be implemented as at least one processor.

According to an embodiment of the disclosure, a method performed by a session management function (SMF) entity in a wireless communication system may include receiving a first message including a requirement of user plane latency (UPL) from a policy control function (PCF) entity, and determining whether to perform PDU session anchor (PSA) user plane function (UPF) relocation, based on the first message.

Additionally, the determining of whether to perform the PSA UPF relocation, based on the first message may include, in case that the requirement of the UPL includes information on maximum allowed UPL, identifying whether a PSA UPF entity connected to a terminal or a target PSA UPF entity satisfies the maximum allowed UPL.

Additionally, the determining of whether to perform the PSA UPF relocation, based on the first message may include, in case that the PSA UPF entity connected to the terminal satisfies the maximum allowed UPL, determining not to perform the PSA UPF relocation.

Additionally, the determining of whether to perform the PSA UPF relocation, based on the first message may include, in case that the PSA UPF entity connected to the terminal fails to satisfy the maximum allowed UPL and the target PSA UPF entity satisfies the maximum allowed UPL, determining to perform the PSA UPF relocation.

Additionally, the determining of whether to perform the PSA UPF relocation, based on the first message may include, in case that multiple PSA UPF entities satisfy the maximum allowed UPL, selecting a PSA UPF entity having smallest UPL among the multiple PSA UPF entities.

According to an embodiment of the disclosure, a method performed by an application function (AF) entity in a wireless communication system may include transmitting a first message for verifying use of a requirement of user plane latency (UPL) to a policy control function (PCF) entity, and in case that the use of the requirement of the UPL is verified by the PCF entity, transmitting a second message including the requirement of the UPL to a session management function (SMF) entity via the PCF entity.

Additionally, the PCF entity may verify, based on pre-configured information, whether the AF entity is configured to be able to transmit the second message including the requirement of the UPL to the SMF entity.

According to an embodiment of the disclosure, a session management function (SMF) entity in a wireless communication system may include a transceiver and a controller, wherein the controller is configured to receive a first message including a requirement of user plane latency (UPL) from a policy control function (PCF) entity, and determine whether to perform PDU session anchor (PSA) user plane function (UPF) relocation, based on the first message.

According to an embodiment of the disclosure, an application function (AF) entity in a wireless communication system may include a transceiver and a controller, wherein the controller is configured to transmit a first message for verifying use of a requirement of user plane latency (UPL) to a policy control function (PCF) entity, and in case that the use of the requirement of the UPL is verified by the PCF entity, transmit a second message including the requirement of the UPL to a session management function (SMF) entity via the PCF entity.

## Claims

1. A method performed by a session management function (SMF) entity in a wireless communication system, the method comprising:
receiving, from a policy control function (PCF) entity, a first message including a requirement of user plane latency (UPL); and
determining whether to perform PDU session anchor (PSA) user plane function (UPF) relocation, based on the first message.

2. The method of claim 1, wherein determining whether to perform the PSA UPF relocation, based on the first message comprises,
in case that the requirement of the UPL comprises information on maximum allowed UPL,
identifying whether a PSA UPF entity connected to a terminal or a target PSA UPF entity satisfies the maximum allowed UPL.

3. The method of claim 2, wherein determining whether to perform the PSA UPF relocation, based on the first message comprises,
in case that the PSA UPF entity connected to the terminal satisfies the maximum allowed UPL,
determining not to perform the PSA UPF relocation.

4. The method of claim 2, wherein determining whether to perform the PSA UPF relocation, based on the first message comprises,
in case that the PSA UPF entity connected to the terminal fails to satisfy the maximum allowed UPL and the target PSA UPF entity satisfies the maximum allowed UPL,
determining to perform the PSA UPF relocation.

5. The method of claim 2, wherein determining whether to perform the PSA UPF relocation, based on the first message comprises,
in case that multiple PSA UPF entities satisfy the maximum allowed UPL,
selecting a PSA UPF entity having smallest UPL among the multiple PSA UPF entities.

6. A method performed by an application function (AF) entity in a wireless communication system, the method comprising:
transmitting, to a policy control function (PCF) entity, a first message for verifying use of a requirement of user plane latency (UPL); and
in case that the use of the requirement of the UPL is verified by the PCF entity, transmitting a second message including the requirement of the UPL to a session management function (SMF) entity via the PCF entity.

7. The method of claim 6, wherein the PCF entity verifies, based on pre-configured information, whether the AF entity is configured to be able to transmit the second message including the requirement of the UPL to the SMF entity.

8. A session management function (SMF) entity in a wireless communication system, the SMF entity comprising:
a transceiver; and
a controller,
wherein the controller is configured to:
receive, from a policy control function (PCF) entity, a first message including a requirement of user plane latency (UPL); and
determine whether to perform PDU session anchor (PSA) user plane function (UPF) relocation, based on the first message.

9. The SMF entity of claim 8, wherein the controller is configured to,
in case that the requirement of the UPL comprises information on maximum allowed UPL,
identify whether a PSA UPF entity connected to a terminal or a target PSA UPF entity satisfies the maximum allowed UPL.

10. The SMF entity of claim 9, wherein the controller is configured to,
in case that the PSA UPF entity connected to the terminal satisfies the maximum allowed UPL,
determine not to perform the PSA UPF relocation.

11. The SMF entity of claim 9, wherein the controller is configured to,
in case that the PSA UPF entity connected to the terminal fails to satisfy the maximum allowed UPL and the target PSA UPF entity satisfies the maximum allowed UPL,
determine to perform the PSA UPF relocation.

12. The SMF entity of claim 9, wherein the controller is configured to,
in case that multiple PSA UPF entities satisfy the maximum allowed UPL,
select a PSA UPF entity having smallest UPL among the multiple PSA UPF entities.

13. An application function (AF) entity in a wireless communication system, the AF entity comprising:
a transceiver; and
a controller,
wherein the controller is configured to:
transmit, to a policy control function (PCF) entity, a first message for verifying use of a requirement of user plane latency (UPL); and
in case that the use of the requirement of the UPL is verified by the PCF entity, transmit a second message including the requirement of the UPL to a session management function (SMF) entity via the PCF entity.

14. The AF entity of claim 13, wherein the PCF entity verifies, based on pre-configured information, whether the AF entity is configured to be able to transmit the second message including the requirement of the UPL to the SMF entity.
